# EUROPÄISCHE PATENTSCHRIFT

(11) **EP 3 386 806 B1**
(45) Veröffentlichungstag und Bekanntmachung des Hinweises auf die Patenterteilung: **04.03.2020**
(21) Anmeldenummer: 16798782.5
(22) Anmeldetag: 23.11.2016
(51) Int. Cl.: B60R 19/18, B60R 19/28, B60R 21/34, B60R 19/00, B60R 19/26

(54) **FUSSGÄNGERSCHUTZVORRICHTUNG FÜR EIN KRAFTFAHRZEUG**
PEDESTRIAN PROTECTION DEVICE FOR A MOTOR VEHICLE
DISPOSITIF DE PROTECTION DE PIÉTONS DESTINÉ À UN VÉHICULE AUTOMOBILE

(30) Priorität: 07.12.2015 DE 102015224456
(43) Veröffentlichungstag der Anmeldung: 17.10.2018
(73) Patentinhaber: Bayerische Motoren Werke Aktiengesellschaft, 80809 München (DE)
(72) Erfinder: AKIF, Öztzan, 80937 München (DE); FICHTINGER, Gerhard, 85630 Grasbrunn (DE); RIEDL, Wilhelm, 85276 Pfaffenhofen (DE); HIERMAIER, Stefan, 79359 Riegel (DE)
(86) Internationale Anmeldenummer: PCT/EP2016/078504
(87) Internationale Veröffentlichungsnummer: WO 2017/097587

(56) Entgegenhaltungen:
- WO-A1-2016/096515
- DE-A1-102013 007 594
- DE-A1-102013 201 590

## Beschreibung

Die vorliegende Erfindung bezieht sich auf eine Fußgängerschutzvorrichtung für ein Kraftfahrzeug mit einem Stoßfängerquerträger, an dem ein Deformationselement angeordnet ist.

Ein bekannter Vorderwagen eines Kraftfahrzeugs hat beispielsweise einen Stoßfängerquerträger, der an vorderen Enden von Längsträgern befestigt ist, und eine Stoßfängerverkleidung, wobei zwischen der Stoßfängerverkleidung und dem Stoßfängerquerträger zum Schutz von Fußgängern ein weicher, auf einem vergleichsweise niedrigen Lastniveau verformbarer Schaum angeordnet ist. Der weiche Schaum ist aufgrund eines Fußgängerschutzes angeordnet, um einen Fußgänger gegebenenfalls vor einer direkten unmittelbaren Kollision mit einer harten, steifen Struktur, wie beispielsweise dem Stoßfängerquerträger, zu schützen.

Des Weiteren gibt es ein Erfordernis, dass in einem sehr niedrigen Geschwindigkeitsbereich von bis zu beispielsweise 4 km/h, in dem der Fußgängerschutz aufgrund der geringen Geschwindigkeit nicht relevant ist, das Kraftfahrzeug bei einer Kollision schadensfrei bleibt.

Darüber hinaus gibt es bei einer etwas höheren Geschwindigkeit, die ebenfalls noch nicht für den Fußgängerschutz relevant ist, wie beispielsweise von über 4 km/h bis kleiner 20 km/h, das Erfordernis, dass ein Schaden bei der Kollision möglichst klein ist und beispielsweise eine Kühlerstruktur, die sich in dem Vorderwagenbereich hinter dem Stoßfängerquerträger befindet, nicht beschädigt wird.

Bei einer Kollision mit einer vergleichsweise hohen Geschwindigkeit, die für einen Fußgängerschutz nicht mehr relevant ist, wie beispielsweise einer Geschwindigkeit von mehr als 50 km/h, liegt ein Schwerpunkt auf der Auslegung des Kraftfahrzeugs und dessen Crashstruktur bei einem Insassenschutz. Hierfür ist der Vorderwagen bzw. ein Fahrzeugbug derart ausgelegt, dass er über eine bestimmte Verformungsstrecke eine große Menge an Kollisionsenergie durch Verformung absorbieren kann.

Diese verschiedenen Anforderungen stehen zum Teil im Gegensatz zueinander und erfordern bisher einen vergleichsweise langen Fahrzeugüberhang und damit ein höheres Gewicht sowie eine nachteilige Beeinflussung der Fahrdynamik.

Zum Lösen der daraus entstehenden Zielkonflikte wurde beispielsweise in der DE 102010054641 A1 eine Stoßfängeranordnung mit einem Querträger vorgeschlagen, der über Crashboxen an der Fahrzeugkarosserie befestigt ist. In Fahrtrichtung vor dem Querträger ist ein Fußgängerschutzelement für einen weichen Anprall eines Fußgängers ausgebildet. Zusätzlich ist ein schwenkbares Energieabsorptionselement vorgesehen, das vor das Fußgängerschutzelement verschwenkbar ist und hierdurch eine erhöhte Energieabsorption bei Kollisionen ermöglicht, bei denen eine höhere Kollisionsenergieabsorptionsfähigkeit der Crashstruktur des Kraftfahrzeugs erforderlich ist.

Die DE 102012112636 A1 zeigt ebenfalls eine Stoßfängeranordnung mit einem Stoßfängerquerträger und einem Fußgängerschutzelement, das von einem steifen Zustand in einen vergleichsweise weichen Zustand, der einem Fußgängerschutz dient, mittels eines Aktuators umgeschaltet werden kann.

Den in der DE 102010054641 A1 und der DE 102012112636 A1 beschriebenen Stoßfängeranordnungen ist gemeinsam, dass hierfür eine Crash- bzw. Pre-Crash-Sensorik und eine Aktor erforderlich sind, wobei auf Grundlage der Ausgangssignale der Sensorik zwischen einem harten, steifen Zustand der Crashstruktur mit hoher Kollisionsenergieabsorptionsfähigkeit und einem weichen Zustand der Crashstruktur mit zu Gunsten des Fußgängerschutzes geringer Kollisionsenergieabsorptionsfähigkeit aktiv umgeschaltet werden kann.

Ferner beschreibt die DE60316232T2 eine Aufprallenergieübertragungsanordnung für eine Kraftfahrzeug mit einem länglichen beweglichen Element, das vor einem Stoßfängerquerträger angeordnet ist. Das bewegliche Element wird kollisionsabhängig entweder in einen Zustand, in dem es mit einem geringen Widerstand beweglich ist, oder in einen Zustand, in dem eine Bewegung formschlüssig blockiert wird. Die Aufprallenergieübertragungsanordnung weist ein um eine Achse schwenkbares Anschlagelement auf, das ein erstes Anschlagende und ein zweites Anschlagende aufweist. Das erste Anschlagende dient zum formschlüssigen Eingriff bei der Kollision in einem niedrigen Geschwindigkeitsbereich eines Kraftfahrzeugs von ungefähr unter 20 km/h. Das zweite Anschlagende dient zum formschlüssigen Eingriff bei der Kollision in einem hohen Geschwindigkeitsbereich von ungefähr über 50 km/h. Dabei bewirkt der formschlüssige Eingriff jeweils einen hohen Wiederstand hinsichtlich einer Verschiebung des länglichen beweglichen Elements.

Eine weiterere Fußgängerschutzvorrichtung für ein Kraftfahrzeug mit einem Stoßfängerquerträger ist aus der DE 10 2013 201590 bekannt.

Es ist die Aufgabe der vorliegenden Erfindung, eine Fußgängerschutzvorrichtung für ein Kraftfahrzeug zu schaffen, die noch einfacher aufgebaut ist, unabhängig von einer Sensorik bzw. einem Aktuator funktioniert, bei niedriger Geschwindigkeit einen Schaden am dem Kraftfahrzeug gering hält, bei mittlerer Geschwindigkeit zum Fußgängerschutz hinreichend weich ist und bei hoher Geschwindigkeit einen Insassenschutz verbessert.

Diese Aufgabe wird durch eine Fußgängerschutzvorrichtung für ein Kraftfahrzeug gelöst, die die Merkmale von Patentanspruch 1 aufweist. Vorteilhafte Ausgestaltungen der Erfindung sind in den abhängigen Patentansprüchen genannt.

Die erfindungsgemäße Fußgängerschutzvorrichtung für Kraftfahrzeug, beispielsweise für einen Kraftfahrzeugbug oder ein Kraftfahrzeugheck, mit einem Stoßfängerquerträger hat ein Deformationselement, das an dem Stoßfängerquerträger angeordnet ist und das ein erstes Element und ein zweites Element aufweist, die bei einer Kollision des Kraftfahrzeugs relativ zueinander, insbesondere in Richtung des Stoßfängerquerträgers, verschiebbar sind, und einen mechanischen Verriegelungsmechanismus. Der Verriegelungsmechanismus weist ein bewegliches, mit einer Federeinrichtung vorspannbares oder vorgespanntes Verriegelungselement auf, das an dem ersten Element oder dem zweiten Element angeordnet ist und mit einer Vertiefung oder Stufe an dem anderen von dem ersten Element und dem zweiten Element formschlüssig verrastbar ist. Der Verriegelungsmechanismus unterbindet bei einer hohen Verschiebegeschwindigkeit, die größer oder gleich einer vorbestimmten zweiten Verschiebegeschwindigkeit ist, eine Verschiebung des ersten Elements relativ zu dem zweiten Element durch Selbsthemmung des Verriegelungselements. Ferner erlaubt der Verriegelungsmechanismus bei einer mittleren Verschiebegeschwindigkeit, die kleiner als die vorbestimmte zweite Verschiebegeschwindigkeit und größer als eine vorbestimmte erste Verschiebegeschwindigkeit ist, eine Verschiebung des ersten Elements und des zweiten Elements relativ zueinander. Darüber hinaus unterbindet der Verriegelungsmechanismus bei einer niedrigen Verschiebegeschwindigkeit, die kleiner oder gleich der vorbestimmten ersten Verschiebegeschwindigkeit ist, eine Verschiebung des ersten Elements und des zweiten Elements relativ zueinander zumindest teilweise durch die formschlüssige Verrastung des Verriegelungselements mit der Vertiefung oder Stufe.

Hierdurch sind keine Kollisionssensorik und keine Aktuatorik notwendig, um eine Verriegelung des Verriegelungsmechanismus zu steuern. Das Deformationselement kann mit einfachen Mitteln mit nur einem Verriegelungselement unter Ausnutzung der Massenträgheit des Verriegelungselements und/oder eine auf das Verriegelungselement wirkende Dämpfungskraft und/oder eine auf das Verriegelungselement wirkende Reibkraft und/oder auf das Verriegelungselement wirkende Kontaktkraft zwischen einem weichen Zustand, in dem eine Relativverschiebung zwischen dem ersten Element und dem zweiten Element ermöglicht ist, und einem steifen Zustand, in dem eine Relativverschiebung zwischen dem ersten Element und dem zweiten Element unterbunden ist, abhängig von der Verschiebegeschwindigkeit, die sich durch die Kollision ergibt, bzw. abhängig von dem damit verbundenen Impuls, geschaltet werden.

Eine Relativverschiebung zwischen dem ersten Element und dem zweiten Element erfolgt dabei im Wesentlichen in Längsrichtung des Kraftfahrzeugs, welches üblicherweise auch eine Hauptrichtung bei einer Frontalkollision des Kraftfahrzeugs ist.

Der Verriegelungsmechanismus gemäß der vorliegenden Erfindung wirkt unabhängig von einer Kollisionssensorik selbsttätig durch beispielsweise Ausnutzung der Massenträgheit des Verriegelungselements. Ferner wirkt der Verriegelungsmechanismus unabhängig von einer Aktuatorik - mit anderen Worten wird der Verriegelungsmechanismus nicht durch einen Aktor angetrieben, der eine Verschiebbarkeit des ersten Elements relativ zu dem zweiten Element erlaubt oder unterbindet.

Erfindungsgemäß ist die Struktur des Vorderwagens bzw. des Hinterwagens des Kraftfahrzeugs bei der niedrigen Verschiebegeschwindigkeit und damit einer niedrigen Kollisionsgeschwindigkeit hinreichend steif ausgebildet, so dass keine strukturelle Beschädigung beispielsweise der Stoßfängerverkleidung oder dergleichen durch zu starke Verformung erfolgt. Hierdurch können Reparaturkosten bei Kollisionen bei sehr niedriger Geschwindigkeit wie beispielsweise bei sogenannten Parkremplern minimiert werden und lediglich auf das Ausbessern von beispielsweise Lackschäden begrenzt werden.

Bei der mittleren Verschiebegeschwindigkeit, und damit einer mittleren Kollisionsgeschwindigkeit, bei der ein Fußgängerschutz relevant ist, ist der Verriegelungsmechanismus entriegelt und das Deformationselement kann mit einer verhältnismäßig geringen Kraft zum Schutz von Fußgängern in seiner Länge verändert werden, d.h. durch Relativverschiebung des ersten Elements und des zweiten Elements zueinander zusammengeschoben werden.

Bei der hohen Verschiebegeschwindigkeit, und damit einer hohen Kollisionsgeschwindigkeit, bei der ein Insassenschutz relevant ist, ist der Verriegelungsmechanismus gehemmt und das Deformationselement kann nur durch plastische Verformung oder sprödes Versagen in seiner Länge verändert werden, so dass hinreichend Kollisionsenergie durch das Deformationselement absorbierbar ist. Eine Selbsthemmung erfolgt durch eine Kontaktkraft zwischen dem Verriegelungselement und dem ersten Element bzw. dem zweiten Element, wobei die Kontaktkraft ein Verkanten des Verriegelungselements bewirkt.

Vorteilhaft sind das Verriegelungselement und die Federeinrichtung derart zusammenwirkend ausgebildet, dass mit einer Verschiebung des ersten Elements und des zweiten Elements relativ zueinander das Verriegelungselement mittels der Federeinrichtung vorspannbar ist.

Hierdurch ist es besonders einfach möglich eine Selbsthemmung des Verriegelungselements zu erzielen. Die Federeinrichtung drückt das Verriegelungselement gegen eine äußere Kontur von einem von dem ersten Element und dem zweiten Element und bewirkt dadurch Kontaktkräfte, die ein Verkanten des Verriegelungselements bewirken, so dass dieses nicht weiter beweglich ist und damit die Bewegung des ersten Elements und des zweiten Elements zueinander gehemmt werden kann.

Ferner kann die Federeinrichtung in einer Ausgangsstellung im Wesentlichen entspannt sein. Mit Ausgangsstellung ist die Position der Fußgängerschutzvorrichtung vor einer Kollision des Kraftfahrzeugs bezeichnet.

Dies hat den Vorteil, dass die Federeinrichtung ihre Federspannkraft im Normalzustand nicht verliert.

Gemäß einer Weiterbildung der Fußgängerschutzvorrichtung der vorliegenden Erfindung weist der Verriegelungsmechanismus eine Kontaktfläche auf, die derart angeordnet und ausgebildet ist, dass bei einer Bewegung des ersten Elements und des zweiten Elements relativ zueinander das Verriegelungselement entlang der Kontaktfläche in Kontakt mit der Kontaktfläche gegen die Federkraft der Federeinrichtung bewegbar und damit vorspannbar ist, bevor das Verriegelungselement den Formschluss mit der Vertiefung oder der Stufe erreicht. Die Kontaktfläche ist damit in Verschieberichtung vor der Vertiefung bzw. der Stufe Dabei wirken die Federeinrichtung, das Verriegelungselement und die Kontaktfläche derart zusammen, dass
bei der hohen Verschiebegeschwindigkeit bei Eingriff des Verriegelungselements mit der Kontaktfläche eine Bewegung des Verriegelungselements entlang der Kontaktfläche durch die Selbsthemmung des Verriegelungselements und damit eine Verschiebung des ersten Elements und des zweiten Elements relativ zueinander unterbunden ist,
bei der mittleren Verschiebegeschwindigkeit bei Eingriff des Verriegelungselements mit der Kontaktfläche eine Bewegung des Verriegelungselements entlang der Kontaktfläche ermöglicht ist und das Verriegelungselement bei einem Verlassen der Kontaktfläche aufgrund einer Massenträgheit des Verriegelungselement über die Vertiefung oder Stufe springt, damit nicht formschlüssig einrastet und eine weitere Verschiebung des ersten Elements und des zweiten Elements zueinander ermöglicht ist, und wobei
bei der langsamen Verschiebegeschwindigkeit bei Eingriff des Verriegelungselements mit der Kontaktfläche eine Bewegung des Verriegelungselements entlang der Kontaktfläche ermöglicht ist und das Verriegelungselement bei der langsamen Verschiebegeschwindigkeit mit der Vertiefung oder Stufe formschlüssig einrastet.

Durch das Vorspannen des Verriegelungselements im Verlauf der Kollision - bei der niedrigen und der mittleren Verschiebegeschwindigkeit - wird vorteilhaft die Kollisionslast für eine Vorspannung der Federeinrichtung genutzt. Hierdurch ist ein selbsttätiger, passiver Mechanismus geschaffen, der lediglich Reibkräfte zwischen dem Verriegelungselement und der Kontaktfläche und/oder eine Massenträgheit des Verriegelungselements und/oder eine Dämpfungswirkung des Federelements für seine Funktion nutzt. Demnach erfolgt bei der niedrigen Verschiebegeschwindigkeit und damit der niedrigen Kollisionsgeschwindigkeit ein Einrasten und das Deformationselement wirkt demnach steif. Bei der mittleren Verschiebegeschwindigkeit und damit der mittleren Kollisionsgeschwindigkeit rastet das Verriegelungselement durch seine Massenträgheit und die anderen genannten Einflussgrößen nicht ein - bei der mittleren Verschiebegeschwindigkeit gelangt das Verriegelungselement vielmehr während der Relativbewegung des ersten Elements und des zweiten Elements zueinander ohne Eingriff über die Vertiefung bzw. die Stufe - und eine weitere Verschiebung zwischen dem ersten Element und dem zweiten Element ist ermöglicht, wodurch das Deformationselement insgesamt weich wirkt. Bei der hohen Verschiebegeschwindigkeit ist eine Bewegung des Verriegelungselements durch hohe wirkende Kontaktkräfte gehemmt, so dass wiederum im Wesentlichen keine Verschiebung des ersten Elements gegenüber dem zweiten Element ermöglicht ist.
Die Kontaktfläche ist bevorzugt schräg zu einer Verschieberichtung des ersten Elements und des zweiten Elements relativ zueinander ausgebildet. Dabei weist die Kontaktfläche in die Verschieberichtung des Verriegelungselements eine Steigung auf.

Durch die schräge Ausbildung der Kontaktfläche bzw. die Steigung kann das Verriegelungselement fortschreitend mit der Federeinrichtung vorgespannt werden. Ferner kann hierdurch vorteilhaft eine Kontaktkraft während der Kollision auf das Verriegelungselement wirken.

Gemäß einer weiteren bevorzugten Weiterbildung ist das Deformationselementangepasst angepasst, in einem Zustand des Verriegelungsmechanismus, in dem eine Verschiebung des ersten Elements relativ zu dem zweiten Element durch Selbsthemmung oder Verrastung zumindest teilweise unterbunden ist/wird, Kollisionsenergie durch plastische Verformung und/oder sprödes Versagen des Deformationselements über eine vorgegebene Deformationsstrecke, beispielsweise in einem Bereich von 60 mm bis 110 mm, zu absorbieren.

Je nach Kollisionslast und der Geschwindigkeit bei der Kollision kann das Deformationselement demnach hinreichend steif reagieren und die Kollisionslast auf die dahinter liegende Crashstruktur des Fahrzeugs übertragen, oder ein Lastschwellwert des selbstgehemmten oder verriegelten Deformationselements ist überschritten, so dass es verformt wird und damit Kollisionsenergie zum Schutz anderer Bauteile und der Fahrzeuginsassen absorbieren kann.

Bevorzugt ist eine Energieabsorption des Deformationselements im Fall der mittleren Verschiebegeschwindigkeit, in dem der Verrieglungsmechanismus weder selbstgehemmt noch verrastet ist, geringer als eine Energieabsorption des Deformationselements im Fall der niedrigen und hohen Verschiebegeschwindigkeit.

Bevorzugt können bei der mittleren Verschiebegeschwindigkeit das erste Element und das zweite Element relativ zueinander über eine Strecke von 60 bis 110mm bewegbar sein.

Damit erfolgt die Verformung des Deformationselements bei der mittleren Verschiebegeschwindigkeit zumindest über die dafür vorgesehene Strecke zum Schutz von einem Fußgänger auf einem verhältnismäßig geringen Lastniveau.

Das erste Element kann ein zylinderförmiges Element sein, das in einer entsprechenden Führung des zweiten Elements verschiebbar ist. Das Verriegelungselement kann an dem ersten Element oder an dem zweiten Element gelagert sein. Insbesondere kann das erste Element ein hohlzylindrisches Element sein. Das erste Element kann dabei einen kreisförmigen Querschnitt haben. Bevorzugt kann das erste Element einen mehreckigen, insbesondere einen regelmäßig mehreckigen, Querschnitt aufweisen.

Gemäß einer bevorzugten Weiterbildung der Fußgängerschutzvorrichtung kann ein Deformationsbereich des Deformationselements zwischen einer Stoßfängerverkleidung und dem Stoßfängerquerträger ausgebildet sein.

Bevorzugt ist das zweite Element an dem Stoßfängerquerträger fixiert oder ist integraler Bestandteil des Stoßfängerquerträgers.

Ferner kann das erste Element in eine Öffnung des Stoßfängerquerträgers hinein verschiebbar sein.

Hierdurch kann ein "weicher" Deformationsbereich des Deformationselements vergrößert werden.

Die Federeinrichtung kann zusätzlich mit einer Dämpfungseinrichtung versehen sein, die eine Bewegung des Verriegelungselements geeignet dämpft. Damit ist ein Einrasten/Nichteinrasten des Verriegelungselements geeignet steuerbar.

Gemäß einer weiteren vorteilhaften Weiterbildung der Fußgängerschutzvorrichtung ist ein Deformationsbereich des Deformationselements an einer Außenseite des Stoßfängerquerträgers angeordnet. Bei einem vorderen Stoßfängerquerträger ist die Außenseite die Vorderseite des Stoßfängerquerträgers. Bei einem hinteren Stoßfängerquerträger ist die Außenseite des Stoßfängerquerträgers die Hinterseite des Stoßfängerquerträgers. Insbesondere ist der Deformationsbereich des Deformationselements zwischen einer Stoßfängerverkleidung und dem Stoßfängerquerträger ausgebildet.

Ein Vorteil der Anordnung des Deformationselements an der Außenseite des Stoßfängerquerträgers ist, dass insbesondere im Hinblick auf den Fußgängerschutz das Deformationselement den Fußgänger durch die weiche Struktur unmittelbar schützt. Andernfalls müsste der Stoßfängerquerträger entsprechend weich gelagert sein, wobei zudem eine Massenträgheit des Stoßfängerquerträgers einer unmittelbare weichen Nachgiebigkeit entgegensteht.

Bevorzugt ist das Verriegelungselement linear beweglich, insbesondere ausschließlich linear beweglich, gelagert.

Vorstehend aufgeführte Weiterbildungen der Erfindung können soweit möglich und sinnvoll beliebig miteinander kombiniert werden.

Es folgt eine Kurzbeschreibung der Figuren.
- Fig. 1: zeigt schematisch eine Fußgängerschutzvorrichtung eines Kraftfahrzeugs gemäß einem Ausführungsbeispiel der vorliegenden Erfindung vor einer Kollision des Kraftfahrzeugs in einem Ausgangszustand eines Deformationselements.
- Fig. 2: zeigt schematisch die Fußgängerschutzvorrichtung gemäß dem Ausführungsbeispiel der vorliegenden Erfindung im Verlauf der Kollision des Kraftfahrzeugs mit einer niedrigen Geschwindigkeit oder einer mittleren Geschwindigkeit mit einer vorgespannten Federeinrichtung des Deformationselements.
- Fig. 3: zeigt schematisch die Fußgängerschutzvorrichtung gemäß dem Ausführungsbeispiel der vorliegenden Erfindung im Verlauf der Kollision des Kraftfahrzeugs mit der niedrigen Geschwindigkeit in einem verriegelten Zustand des Deformationselements.
- Fig. 4: zeigt schematisch die Fußgängerschutzvorrichtung gemäß dem Ausführungsbeispiel der vorliegenden Erfindung im Verlauf der Kollision des Kraftfahrzeugs mit der mittleren Geschwindigkeit in einem entriegelten Zustand des Deformationselements.
- Fig. 5: zeigt schematisch die Fußgängerschutzvorrichtung gemäß dem Ausführungsbeispiel der vorliegenden Erfindung im Verlauf der Kollision des Kraftfahrzeugs mit der hohen Geschwindigkeit in einem selbstgehemmten Zustand des Deformationselements.

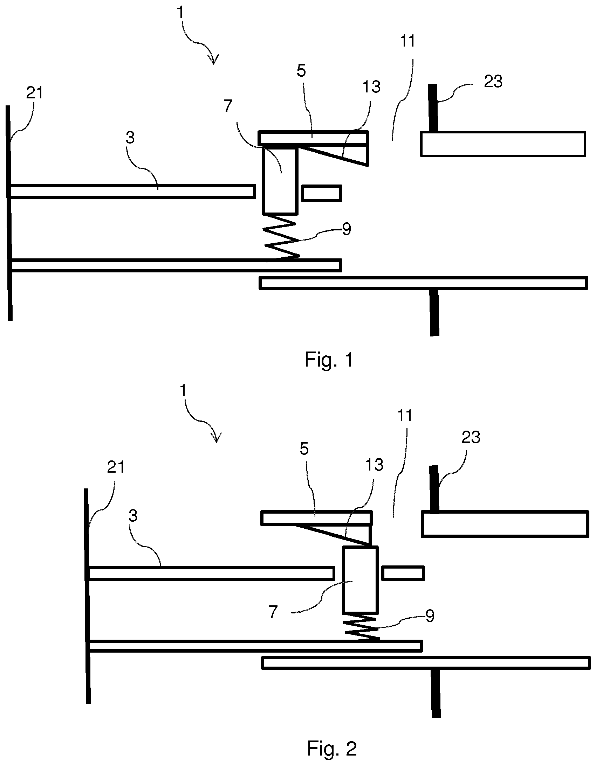

Figuren 1 bis 5 zeigen eine Fußgängerschutzvorrichtung für ein Kraftfahrzeug gemäß einem Ausführungsbeispiel der vorliegenden Erfindung vor einer Kollision des Kraftfahrzeugs und während einer Kollision des Kraftfahrzeugs mit verschiedenen Geschwindigkeiten.

Die Fußgängerschutzvorrichtung 1 ist an einem Frontend eines Kraftfahrzeugvorderwagens, insbesondere einem Kraftfahrzeugbug, mit einem Stoßfängerquerträger 23 montiert. Insbesondere ist die Fußgängerschutzvorrichtung 1 in einem Raum zwischen einer Fahrzeugaußenhaut, das heißt einer Stoßfängerverkleidung 21, und dem Stoßfängerquerträger 23 angeordnet. Wie in Figur 1 gezeigt ist, hat die Fußgängerschutzvorrichtung ein Deformationselement 1 mit einem ersten Element 3 und einem zweiten Element 5. Das erste Element 3 und das zweite Element 5 sind prinzipiell zueinander verschiebbar bzw. verlagerbar ausgebildet. Insbesondere ist das erste Element 3 in das zweite Element 5 einschiebbar. Das zweite Element 5 ist an dem Stoßfängerquerträger 23 fixiert und mit diesem starr verbunden. Das Deformationselement 1 weist zudem einen Verriegelungsmechanismus auf, der eine Verschiebung des ersten Elements 3 in Bezug auf das zweite Element 5 einschränken kann. Der Verriegelungsmechanismus hat ein Verriegelungselement 7, das mittels einer Feder 9 in Querrichtung vorspannbar und verschiebbar ist. Mit anderen Worten ist das Verriegelungselement 7 quer zu einer Fahrzeuglängsrichtung verlagerbar in/an dem ersten Element 3 gelagert. Der Verriegelungsmechanismus weist ferner eine Kontaktfläche 13 auf, die an einer Innenseite des zweiten Elements 5 ausgebildet ist, sowie eine Ausnehmung 11, die ebenfalls in dem zweiten Element 5, das heißt an dessen Umfang, ausgebildet ist. Die Kontaktfläche 13 ist in Fahrzeuglängsrichtung, das heißt in Verschieberichtung des ersten Elements 3 bzw. des Verriegelungselements 7 mit einer Steigung versehen und ist damit schräg, insbesondere mit einem sehr spitzen Winkel, zu der Fahrzeuglängsrichtung ausgebildet.

Die Funktion des Deformationselements 1 und insbesondere des Verriegelungsmechanismus ist im Folgenden unter Bezugnahme auf Figuren 2 bis 5 beschrieben.

Die Funktion und Wirkung der Fußgängerschutzvorrichtung 1 bei einer Frontalkollision des Kraftfahrzeugs mit einer mittleren oder niedrigen Kollisionsgeschwindigkeit ist im Folgenden beschrieben.

Figur 2 zeigt einen Zustand des Deformationselements im Verlauf einer frontalen Kollision des Kraftfahrzeugs bei einer niedrigen oder einer mittleren Kollisionsgeschwindigkeit. Dabei wirkt eine Kollisionslast über die Stoßfängerverkleidung 21 auf das erste Element 3, wodurch das erste Element 3 in Richtung des zweiten Elements 5 und damit des Stoßfängerquerträgers 23 verschoben wird. Hierbei kommt das Verriegelungselement 7 mit der Kontaktfläche 13, die an der Innenseite des zweiten Elements 5 ausgebildet ist, in Kontakt.

Bei der mittleren und niedrigen Kollisionsgeschwindigkeit, die wiederum eine mittlere bzw. niedrige Verschiebegeschwindigkeit des ersten Elements 3 gegenüber dem zweiten Element 5 bewirkt, sind die später in Bezug auf die hohe Kollisionsgeschwindigkeit beschriebenen Kontaktkräfte geringer und führen daher zu keiner Selbsthemmung in Form einer Verkantung. Damit wird durch ein Zusammenwirken zwischen dem Verriegelungselement 7 und der Kontaktfläche 13 das Verriegelungselement 7 im Verlaufe der Verschiebung des ersten Elements 3 in Querrichtung bewegt und somit gegen die Federeinrichtung 9 gedrückt, so dass diese Federeinrichtung 9 vorgespannt wird. In Figur 2 ist der Zustand gezeigt, in dem das Verriegelungselement um eine maximale Strecke in Querrichtung verschoben ist und damit eine maximale Vorspannung der Federeinrichtung 9 erreicht ist.

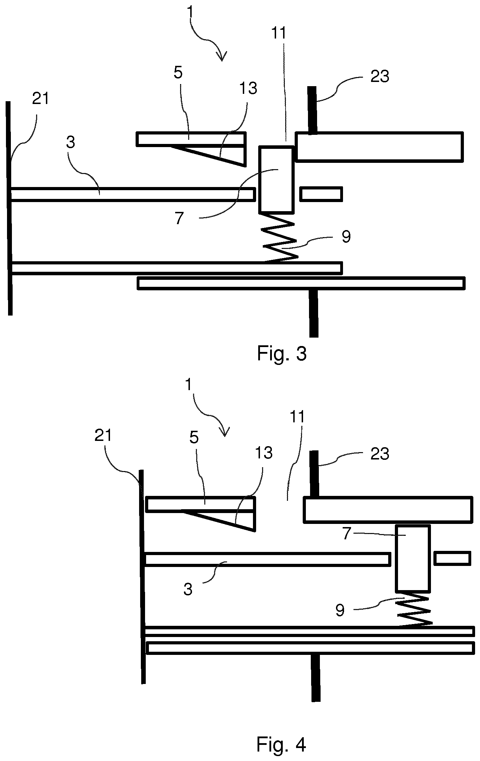

Figur 3 zeigt einen weiteren Verlauf der Kollision bei einer geringen Verschiebegeschwindigkeit des ersten Elements 3 und damit der geringen Kollisionsgeschwindigkeit des Kraftfahrzeugs. Nach einer maximalen Vorspannung der Federeinrichtung 9 bzw. des Verriegelungselements 7 und einem Verlassen der Kontaktfläche 13 wird das Verriegelungselement 7 in Querrichtung in Richtung der Außenwand des zweiten Elements 5 gedrückt. Dabei greift das Verriegelungselement 7 mit einer Ausnehmung bzw. Vertiefung 11 in der Wand des zweiten Elements 5 ein. In diesem Zustand ist das Verriegelungselement 7 in formschlüssigen Eingriff sowohl mit dem ersten Element 3 als auch mit dem zweiten Element 5, so dass eine weitere Verschiebung des ersten Elements 3 relativ zu dem zweiten Element 5 durch das Verriegelungselement 7 blockiert ist. Sobald der in Figur 3 gezeigte Zustand erreicht ist, wirkt das Deformationselement 1 als steifes Element. In diesem Zustand kann das Deformationselement 1 Kollisionslasten von dem Kollisionsgegner direkt auf den Stoßfängerquerträger 23 und die dahinter liegende Crashstruktur des Kraftfahrzeugs übertragen. Wird eine bestimmte Kollisionslast überschritten, versagt das Deformationselement 1 durch plastisches Verformen oder sprödes Versagen und absorbiert somit Kollisionsenergie über eine vorgegebene Versagensstrecke von maximal der Länge des Deformationselements 1 im verriegelten Zustand.

Das Deformationselement 1 ist insbesondere derart ausgelegt, dass es bei Kollisionsgeschwindigkeiten von beispielsweise weniger als 4 km/h eine Kollisionslast ohne Verformung auf die Crashstruktur übertragen kann.

Bei einer größeren Kollisionsgeschwindigkeit, die jedoch für einen Fußgängerschutz noch nicht relevant ist, wie beispielsweise einer Geschwindigkeit zwischen 4 km/h und 20 km/h, wird das Deformationselement 1 bei einem bestimmten Lastniveau verformt, so dass das Deformationselement 1 zum Abbau von Kollisionsenergie beiträgt, ohne dass beispielsweise hinter dem Stoßfängerquerträger 23 vorhandene Bauelemente, wie beispielsweise ein Kühler, beschädigt werden.

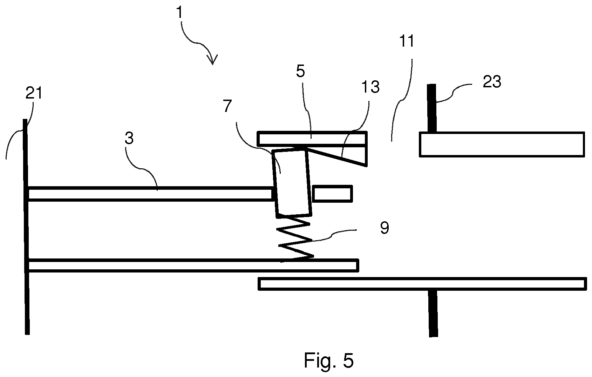

Figur 4 zeigt einen weiteren Verlauf der Kollision im Fall einer mittleren Verschiebegeschwindigkeit des ersten Elements 3 und damit der mittleren Kollisionsgeschwindigkeit des Kraftfahrzeugs. In dem in Figur 4 gezeigten Zustand ist kein formschlüssiger Eingriff des Verriegelungselements 7 und damit des ersten Elements 3 mit dem zweiten Element 5 erfolgt und demnach wurde das erste Element 3 weiter in Richtung des Stoßfängerquerträgers 23 relativ zu dem zweiten Element 5 mit verhältnismäßig wenig Widerstand verschoben. Das Verriegelungselement 7 hat die Ausnehmung 11 übersprungen. Beispielsweise kann das Deformationselement 1 so konstruiert sein, so dass ab einer Kollisionsgeschwindigkeit von ungefähr 20 km/h keine Verrastung zwischen dem ersten Element 3 und dem zweiten Element 5 erfolgt und das Deformationselement 1 damit insgesamt über eine längere Verformungsstrecke deutlich weicher reagiert, als das bei dem in Figur 3 gezeigten verriegelten Zustand bzw. eingerasteten Zustand bei der niedrigen Kollisionsgeschwindigkeit der Fall ist. Ebenso reagiert das Deformationselement 1 bei der mittleren Kollisionsgeschwindigkeit weicher als bei der später in Bezug auf Fig. 5 beschriebenen hohen Kollisionsgeschwindigkeit.

Aufgrund einer Massenträgheit des Verriegelungselements 7 benötigt das Verriegelungselement 7 eine gewisse Zeit, bis es durch die Federeinrichtung 9 hinreichend weit in Querrichtung bewegt wird. Bei der mittleren Verschiebegeschwindigkeit des ersten Elements 3 führt dies dazu, dass das Verriegelungselement 7 nicht in die Ausnehmung 11 des zweiten Elements 5 eingreifen kann, so dass das erste Element 3 weiter in Richtung der Stoßfängerquerträgers 23 verschoben werden kann und das Verriegelungselement 7 mit einer Innenseite des zweiten Elements 5 in Kontakt kommt und entlang der Innenseite verschoben werden kann. Es kommt zu keinem formschlüssigen Eingriff zwischen dem Verriegelungselement 7 und dem zweiten Element 5.

Bei der mittleren Kollisonsgeschwindigkeit von beispielsweise mehr als 20 km/h und weniger als 50 km/h ist es wichtig, dass das Frontend des Kraffahrzeugvorderwagens, und insbesondere die Stoßfängerverkleidung in Verbindung mit dem Deformationselement 1 hinreichend weich bei einem geringen Verformungskraftniveau reagiert.

Dies ist erfindungsgemäß durch den beschriebenen Verriegelungsmechanismus verwirklicht, der auf Grundlage einer Massenträgheit des Verriegelungselements 7 in Zusammenwirkung mit der Federkraft des Federelements 9 sowie Reibkräften funktioniert.

Somit kann ein Zielkonflikt gelöst werden, der zum Einen bei der niedrigen Kollisionsgeschwindigkeit eine hinreichend große Steifigkeit des Deformationselements 1 bzw. ein hinreichend großes Verformungskraftniveau des Deformationselements 1 erfordert, bei der mittleren Kollisionsgeschwindigkeit einen hinreichenden Fußgängerschutz durch ein niedriges Verformungskraftniveau gewährleistet und bei der hohen Kollisionsgeschwindigkeit wiederum ein hinreichend großes Verformungskraftniveau des Deformationselements 1 erfordert.

Figur 5 zeigt einen Verlauf der Kollision bei einer hohen Verschiebegeschwindigkeit des ersten Elements 3 und damit der hohen Kollisionsgeschwindigkeit des Kraftfahrzeugs.

Erfolgt die Frontalkollision des Kraftfahrzeugs mit der hohen Kollisionsgeschwindigkeit, insbesondere einer hohen Relativgeschwindigkeit zwischen dem Kraftfahrzeug und einem Kollisionsgegner, wird das erste Element 3 mit einer hohen Verschiebegeschwindigkeit gegenüber dem zweiten Element 5 verschoben. In diesem Fall der hohen Verschiebegeschwindigkeit kommt das Verriegelungselement 7 zunächst wie bei der Kollision mit der niedrigen und der mittleren Geschwindigkeit mit der Kontaktfläche 13 in Kontakt oder ist bereits in der Ausgangsposition mit der Kontaktfläche 13 in Kontakt. Bei der hohen Verschiebegeschwindigkeit wirken hohe Kontaktkräfte an der Kontaktposition zwischen dem Verriegelungselement 7 und der Kontaktfläche 13 sowie zwischen dem Verriegelungselement 7 und dem ersten Element 3, d.h. im Bereich einer Lagerung des Verriegelungselements 7 an dem ersten Element 3. Durch die hohen Kontaktkräfte wird das Verriegelungselement 7 gehemmt bzw. blockiert und bewegt sich nicht oder wenig in die Querrichtung. Es erfolgt eine Verkantung des Verriegelungselements 7 im Bereich der Lagerung. Insgesamt erfolgt demnach bei der hohen Kollisionsgeschwindigkeit eine Selbsthemmung des Verriegelungsmechanismus mit dem Verriegelungselement 7.

Demnach blockiert der Verriegelungsmechanismus bei der hohen Kollisionsgeschwindigkeit eine Bewegung bzw. Verschiebung des ersten Elements 3 gegenüber dem zweiten Element 5, so dass ein Zusammendrücken des Deformationselements 1 nur über ein plastisches und/oder sprödes Versagen des Deformationselements 1 möglich ist. Damit ist das Deformationselement 1 im Wesentlichen über seine gesamte ursprüngliche Länge auf einem hohen Kraftniveau durch das plastische und/oder spröde Versagen verformbar, so dass über im Wesentlichen die gesamte Länge des Deformationselements 1 verhältnismäßig viel Kollisionsenergie abgebaut werden kann. Das Frontend des Kraftfahrzeugvorderwagens, und insbesondere die Stoßfängerverkleidung 23 in Verbindung mit dem Deformationselement 1 hat damit eine hinreichende Festigkeit, wobei es bei einem hohen Verformungskraftniveau versagt.

Die hohe Kollisionsgeschwindigkeit, bei der die Verschiebung des ersten Elements 3 gegenüber dem zweiten Element 5 gehemmt ist, kann beispielsweise 50 km/h oder mehr betragen. Ab der Geschwindigkeit von beispielsweise 50 km/h tritt ein Fußgängerschutz gegenüber einem Insassenschutz in den Hintergrund. Für den Insassenschutz ist es wiederum vorteilhaft, wenn über die zur Verfügung stehende Verformungslänge möglichst viel Kollisionsenergie abgebaut werden kann, was durch die erfindungsgemäße Fußgängerschutzvorrichtung 1 somit gewährleistet ist. Es steht neben der übrigen Crashstruktur des Vorderwagens somit auch der Bereich zwischen der Stoßfängerverkleidung 21 und dem Stoßfängerquerträger 23 zum hinreichenden Abbau von Kollisionsenergie zur Verfügung.

Das Verriegelungselement 7 kann auf an dem zweiten Element beweglich gelagert sein und entsprechend mit dem ersten Element eingreifen.

## Patentansprüche

1. Fußgängerschutzvorrichtung für Kraftfahrzeug mit einem Stoßfängerquerträger (23), wobei die Fußgängerschutzvorrichtung ein Deformationselement (1), das an dem Stoßfängerquerträger (23) angeordnet ist und das ein erstes Element (3) und ein zweites Element (5) aufweist, die bei einer Kollision des Kraftfahrzeugs relativ zueinander, insbesondere in Richtung des Stoßfängerquerträgers (23), verschiebbar sind, und einen mechanischen Verriegelungsmechanismus aufweist, der ein bewegliches, mit einer Federeinrichtung (9) vorspannbares oder vorgespanntes Verriegelungselement (7) aufweist, das an dem ersten Element (3) oder dem zweiten Element angeordnet ist und mit einer Vertiefung (11) oder Stufe an dem anderen von dem ersten Element und dem zweiten Element (5) formschlüssig verrastbar ist, wobei
der Verriegelungsmechanismus bei einer hohen Verschiebegeschwindigkeit, die größer oder gleich einer vorbestimmten zweiten Verschiebegeschwindigkeit ist, eine Verschiebung des ersten Elements (3) relativ zu dem zweiten Element (5) durch Selbsthemmung des Verriegelungselements (7) unterbindet,
der Verriegelungsmechanismus bei einer mittleren Verschiebegeschwindigkeit, die kleiner als die vorbestimmte zweite Verschiebegeschwindigkeit und größer als eine vorbestimmte erste Verschiebegeschwindigkeit ist, eine Verschiebung des ersten Elements (3) und des zweiten Elements (5) relativ zueinander erlaubt, und
der Verriegelungsmechanismus bei einer niedrigen Verschiebegeschwindigkeit, die kleiner oder gleich der vorbestimmten ersten Verschiebegeschwindigkeit ist, eine Verschiebung des ersten Elements (3) und des zweiten Elements (5) relativ zueinander zumindest teilweise durch die formschlüssige Verrastung des Verriegelungselements (7) mit der Vertiefung (11) oder Stufe unterbindet.

2. Fußgängerschutzvorrichtung nach Patentanspruch 1, wobei das Verriegelungselement (7) und die Federeinrichtung (9) derart zusammenwirkend ausgebildet sind, dass mit einer Verschiebung des ersten Elements (3) und des zweiten Elements (5) relativ zueinander das Verriegelungselement (7) mittels der Federeinrichtung (9) vorspannbar ist, und wobei insbesondere die Federeinrichtung (9) in einer Ausgangsstellung im Wesentlichen entspannt ist.

3. Fußgängerschutzvorrichtung nach Patentanspruch 2, wobei der Verriegelungsmechanismus eine Kontaktfläche (13) aufweist, die derart angeordnet und ausgebildet ist, dass bei einer Relativbewegung des ersten Elements (3) und des zweiten Elements zueinander das Verriegelungselement (7) entlang der Kontaktfläche (13) in Kontakt mit der Kontaktfläche (13) gegen die Federkraft der Federeinrichtung (9) bewegbar und damit vorspannbar ist, bevor das Verriegelungselement (7) den Formschluss mit der Vertiefung (11) oder der Stufe erreicht, wobei die Federeinrichtung (9), das Verriegelungselement (7) und die Kontaktfläche (13) derart zusammenwirken, dass
bei der hohen Verschiebegeschwindigkeit bei Eingriff des Verriegelungselements (7) mit der Kontaktfläche (13) eine Bewegung des Verriegelungselements (7) entlang der Kontaktfläche (13) durch die Selbsthemmung des Verriegelungselements (7) und damit eine Verschiebung des ersten Elements (3) und des zweiten Elements (5) relativ zueinander unterbunden ist,
bei der mittleren Verschiebegeschwindigkeit bei Eingriff des Verriegelungselements (7) mit der Kontaktfläche (13) eine Bewegung des Verriegelungselements (7) entlang der Kontaktfläche (13) ermöglicht ist und das Verriegelungselement (7) bei einem Verlassen der Kontaktfläche (13) aufgrund einer Massenträgheit des Verriegelungselement (7) über die Vertiefung (11) oder Stufe springt, damit nicht formschlüssig einrastet und eine weitere Verschiebung des ersten Elements (3) und des zweiten Elements (5) zueinander ermöglicht ist, und wobei
bei der langsamen Verschiebegeschwindigkeit bei Eingriff des Verriegelungselements (7) mit der Kontaktfläche (13) eine Bewegung des Verriegelungselements (7) entlang der Kontaktfläche (13) ermöglicht ist und das Verriegelungselement (7) bei der langsamen Verschiebegeschwindigkeit mit der Vertiefung (11) oder Stufe formschlüssig einrastet.

4. Fußgängerschutzvorrichtung nach Patentanspruch 3, wobei die Kontaktfläche (13) schräg zu einer Verschieberichtung des ersten Elements (3) und des zweiten Elements (5) relativ zueinander ausgebildet ist und insbesondere in die Verschieberichtung des Verriegelungselements (7) in Richtung der Kontaktfläche (13) eine Steigung aufweist.

5. Fußgängerschutzvorrichtung nach einem der Patentansprüche 1 bis 4, wobei das Deformationselement (1) angepasst ist, in einem Zustand des Verriegelungsmechanismus, in dem eine Verschiebung des ersten Elements (3) relativ zu dem zweiten Element (5) durch Selbsthemmung oder Verrastung zumindest teilweise unterbunden ist/wird, Kollisionsenergie durch plastische Verformung und/oder sprödes Versagen des Deformationselements (1) über eine vorgegebene Deformationsstrecke, beispielsweise in einem Bereich von 60 mm bis 110 mm, zu absorbieren.

6. Fußgängerschutzvorrichtung nach Patentanspruch 5, wobei eine Energieabsorption des Deformationselements (1) im Fall der mittleren Verschiebegeschwindigkeit, in dem der Verrieglungsmechanismus weder selbstgehemmt noch verrastet ist, geringer als eine Energieabsorption des Deformationselements (1) im Fall der niedrigen und hohen Verschiebegeschwindigkeit ist.

7. Fußgängerschutzvorrichtung nach einem der Patentansprüche 1 bis 6, wobei bei der mittleren Verschiebegeschwindigkeit das erste Element (3) und das zweite Element (5) relativ zueinander über eine Strecke von 60 bis 110mm bewegbar sind.

8. Fußgängerschutzvorrichtung nach einem der Patentansprüche 1 bis 7, wobei das erste Element (3) ein zylinderförmiges Element ist, das in einer entsprechenden Führung des zweiten Elements (5) verschiebbar ist, und wobei insbesondere das Verriegelungselement (7) an dem ersten Element (3) oder dem zweiten Element (5) beweglich gelagert ist.

9. Fußgängerschutzvorrichtung nach einem der Patentansprüche 1 bis 8, wobei ein Deformationsbereich des Deformationselements (1) zwischen einer Stoßfängerverkleidung (21) und dem Stoßfängerquerträger (23) ausgebildet ist.

10. Fußgängerschutzvorrichtung nach einem der Patentansprüche 1 bis 9, wobei das zweite Element (5) an dem Stoßfängerquerträger (23) fixiert ist oder integraler Bestandteil des Stoßfängerquerträgers (23) ist.

11. Fußgängerschutzvorrichtung nach Patentanspruch 10, wobei das erste Element (3) in eine Öffnung des Stoßfängerquerträgers (23) hinein verschiebbar ist.

## Claims

1. A pedestrian protection device for a motor vehicle with a bumper cross beam (23), the pedestrian protection device having a deformation element (1) which is arranged on the bumper cross beam (23) and which has a first element (3) and a second element (5), which are displaceable relative to one another, in particular in the direction of the bumper cross beam (23), in the event of a collision of the motor vehicle, and having a mechanical locking mechanism which has a displaceable locking element (7) which is preloadable or preloaded with a spring device (9) and which is arranged on the first element (3) or the second element and can be positively engaged with a recess (11) or step on the other of the first element and the second element (5), wherein
at a high displacement speed which is greater than or equal to a predetermined second displacement speed, the locking mechanism prevents displacement of the first element (3) relative to the second element (5) through the self-locking of the locking element (7),
at an average displacement speed which is less than the predetermined second displacement speed and greater than a predetermined first displacement speed, the locking mechanism permits displacement of the first element (3) and the second element (5) relative to one another, and,
at a low displacement speed which is less than or equal to the predetermined first displacement speed, the locking mechanism prevents displacement of the first element (3) and the second element (5) relative to one another at least partially by the positive locking of the locking element (7) with the recess (11) or step.

2. A pedestrian protection device according to Claim 1, the locking element (7) and the spring device (9) being designed to cooperate in such a way that, with a displacement of the first element (3) and the second element (5) relative to one another, the locking element (7) is preloadable by means of the spring device (9) and, in particular, the spring device (9) being essentially slackened in an initial position.

3. A pedestrian protection device according to Claim 2, the locking mechanism having a contact surface (13) which is arranged and designed in such a way that, with a displacement of the first element (3) and the second element relative to one another, the locking element (7) is displaceable along the contact surface (13) in contact with the contact surface (13) against the spring power of the spring device (9) and is thus preloadable before the locking element (7) achieves the positive locking with the recess (11) or the step, the spring device (9), the locking element (7) and the contact surface (13) cooperating in such a way that,
at the high displacement speed, displacement of the locking element (7) along the contact surface (13) is prevented when the locking element (7) engages with the contact surface (13) by means of the self-locking of the locking element (7) and thus displacement of the first element (3) and the second element (5) relative to one another is prevented,
at the average displacement speed, displacement of the locking element (7) along the contact surface (13) is possible when the locking element (7) engages with the contact surface (13) and the locking element (7) jumps above the recess (11) or step when leaving the contact surface (13) due to a mass inertia of the locking element (7) and thus does not enter into a positively locking engagement and a further displacement of the first element (3) and the second element (5) relative to one another is possible and,
at the slow displacement speed, displacement of the locking element (7) along the contact surface (13) is possible when the locking element (7) engages with the contact surface (13) and,
at the slow displacement speed, the locking element (7) enters into a positively locking engagement with the recess (11) or step.

4. A pedestrian protection device according to Claim 3, the contact surface (13) being arranged obliquely to a direction of displacement of the first element (3) and the second element (5) relative to one another and in particular having an incline in the direction of displacement of the locking element (7) in the direction of the contact surface (13).

5. A pedestrian protection device according to one of Claims 1 to 4, the deformation element (1) being adjusted in such a way that,
when the locking mechanism is in a state in which a displacement of the first element (3) relative to the second element (5) is/will be at least partly prevented by self-locking or latching, it absorbs collision energy through plastic deformation and/or brittle fracture of the deformation element (1) across a specified deformation distance, for example in a range from 60 mm to 110 mm.

6. A pedestrian protection device according to Claim 5, an energy absorption of the deformation element (1) in the case of the average displacement speed, in which the locking mechanism is neither self-locking nor engaged, being lower than an energy absorption of the deformation element (1) in the case of the low and high displacement speed.

7. A pedestrian protection device according to one of Claims 1 to 6, wherein, at the average displacement speed, the first element (3) and the second element (5) are displaceable relative to one another across a distance of 60 to 110 mm.

8. A pedestrian protection device according to one of Claims 1 to 7, the first element (3) being a cylinder-shaped element which is displaceable in a corresponding guide of the second element (5), and in particular the locking element (7) being displaceably positioned on the first element (3) or the second element (5).

9. A pedestrian protection device according to one of Claims 1 to 8, a deformation area of the deformation element (1) being formed between a bumper covering (21) and the bumper cross beam (23).

10. A pedestrian protection device according to one of Claims 1 to 9, the second element (5) being fixed to the bumper cross beam (23) or forming an integral component of the bumper cross beam (23).

11. A pedestrian protection device according to Claim 10, the first element (3) being displaceable into an opening of the bumper cross beam (23).

## Revendications

1. Dispositif de protection des piétons destiné à un véhicule comprenant une traverse de pare-chocs (23), ce dispositif de protection des piétons comprenant un élément de déformation (1) qui est monté sur la traverse de pare-chocs (23) et comporte un premier élément (3) et un second élément (5) qui, lors d'une collision du véhicule peuvent être déplacés par translation l'un par rapport à l'autre, en particulier dans la direction de la traverse de pare-chocs (23), ainsi qu'un mécanisme de verrouillage mécanique qui comporte un élément de verrouillage mobile (7) qui peut être précontraint ou est précontraint avec un dispositif de ressort (9), qui est monté sur le premier élément (3) ou sur le second élément et qui peut être encliqueté par une liaison par la forme dans un évidement (11) ou un gadin de l'autre élément parmi le premier élément et le second élément (5),
en présence d'une vitesse de translation élevée qui est supérieure ou égale à une seconde vitesse de translation prédéfinie, le mécanisme de verrouillage empêchant la translation du premier élément (3) par rapport au second élément (5) par autoblocage de l'élément de verrouillage (7),
en présence d'une vitesse de translation moyenne qui est inférieure à la seconde vitesse de translation prédéfinie et supérieure à une première vitesse de translation prédéfinie, le mécanisme de verrouillage permettant une translation du premier élément (3) et du second élément (5) l'un par rapport à l'autre, et
en présence d'une faible vitesse de translation qui est inférieure ou égale à la première vitesse de translation prédéfinie, le mécanisme de verrouillage empêchant une translation du premier élément (3) et du second élément (5) l'un par rapport à l'autre au moins partiellement par encliquetage par une liaison par la forme de l'élément de verrouillage (7) avec l'évidement (11) ou le gradin.

2. Dispositif de protection des piétons conforme à la revendication 1,
dans lequel l'élément de verrouillage (7) et le dispositif de ressort (9) sont réalisés de manière à coopérer de sorte qu'avec une translation du premier élément (3) et du second élément (5) l'un par rapport à l'autre, l'élément de verrouillage (7) puisse être précontraint au moyen du dispositif de ressort (9), et en particulier le dispositif de ressort (9) est essentiellement détendu dans une position de départ.

3. Dispositif de protection des piétons conforme à la revendication 2,
dans lequel le mécanisme de verrouillage comporte une surface de contact (13) qui est positionnée et conformée de sorte que, en présence d'un déplacement du premier élément (3) et du second élément l'un par rapport à l'autre, l'élément de verrouillage (7) puisse se déplacer le long de la surface de contact (13) en étant en contact avec cette surface de contact (13) contre la force de rappel du dispositif de ressort (9) et ainsi être précontraint avant que l'élément de verrouillage (7) n'atteigne la liaison par la forme avec l'évidement (11) ou le gradin, le dispositif de ressort (9), l'élément de verrouillage (7) et la surface de contact (13) coopérant de sorte que :
en présente d'une vitesse de translation élevée, lors de la mise en prise de l'élément de verrouillage (7) avec la surface de contact (13), un déplacement de cet élément de verrouillage (7) le long de cette surface de contact (13) soit empêché par autoblocage de l'élément de verrouillage (7) et qu'ainsi une translation du premier élément (3) et du second élément (5) l'un par rapport à l'autre soit empêchée,
en présence d'une vitesse de translation moyenne, lors d'une mise en prise de l'élément de verrouillage (7) avec la surface de contact (13), un déplacement de cet élément de verrouillage (7) le long de cette surface de contact (13) soit possible et que lorsqu'il quitte la surface de contact (13), l'élément de verrouillage (7) saute en raison de son inertie sur l'évidement (11) ou le gradin, et ne soit ainsi pas encliqueté par une liaison par la forme, et qu'une poursuite de la translation du premier élément (3) et du second élément (5) l'un par rapport à l'autre soit possible, et
en présence d'une faible vitesse de translation lors de la mise en prise de l'élément de verrouillage (7) avec la surface de contact (13) un déplacement de cet élément de verrouillage (7) le long de cette surface de contact (13) soit possible, et qu'en présence de la vitesse de translation lente, l'élément de verrouillage (7) s'encliquette avec l'évidement (11) ou le gradin.

4. Dispositif de protection des piétons conforme à la revendication 3,
dans lequel la surface de contact (13) est oblique par rapport à la direction de translation du premier élément (3) et du second élément (5) l'un par rapport à l'autre et, a en particulier, une pente dans la direction de translation de l'élément de verrouillage (7) en direction de la surface de contact (13).

5. Dispositif de protection des piétons conforme à l'une des revendications 1 à 4,
dans lequel l'élément de déformation (1) est adapté, pour absorber, lorsque le mécanisme de verrouillage est dans un état dans lequel une translation du premier élément (3) par rapport au second élément (5) est au moins partiellement empêché, par autoblocage ou par encliquetage, l'énergie de collision par déformation plastique et/ou par défaillance du fait de sa fragilité, de cet élément de déformation (1) sur une piste de déformation prédéfinie, à titre d'exemple, dans une plage de 60 mm à 110 mm.

6. Dispositif de protection des piétons conforme à la revendication 5,
dans lequel en présence d'une vitesse de translation moyenne pour laquelle le mécanisme de verrouillage n'est ni autobloqué, ni encliqueté l'absorption d'énergie de l'élément de déformation (1) est plus faible que son absorption d'énergie en présence d'une vitesse de translation faible ou élevée.

7. Dispositif de protection des piétons conforme à l'une des revendications 1 à 6,
dans lequel, en présence d'une vitesse de translation moyenne le premier élément (3) et le second élément (5) peuvent être déplacés l'un par rapport à l'autre sur une plage de 60 à 110 mmm.

8. Dispositif de protection des piétons conforme à l'une des revendications 1 à 7,
dans lequel le premier élément (3) est un élément cylindrique qui peut être déplacé par translation dans un guidage correspondant du second élément (5) et en particulier l'élément de verrouillage (7) est monté mobile sur le premier élément (3) ou sur le second élément (5).

9. Dispositif de protection des piétons conforme à l'une des revendications 1 à 8,
dans lequel la plage de déformation de l'élément de déformation (1) est formée entre un habillage de parechocs (21) et la traverse de parechocs (23).

10. Dispositif de protection des piétons conforme à l'une des revendications 1 à 9,
dans lequel le second élément (5) est fixé sur la traverse de parechocs (23) ou est un élément intégré à la traverse de parechocs (23).

11. Dispositif de protection des piétons conforme à la revendication 10,
dans lequel le premier élément (3) peut être déplacé par translation dans une ouverture de la traverse de parechocs (23).
